# EUROPÄISCHE PATENTSCHRIFT

(11) **EP 1 354 772 B1**
(45) Veröffentlichungstag und Bekanntmachung des Hinweises auf die Patenterteilung: **19.05.2010**
(21) Anmeldenummer: 03090094.8
(22) Anmeldetag: 04.04.2003
(51) Int. Cl.: B60R 21/20

(54) **Kraftfahrzeugbaugruppe**
Motor vehicle sub-assembly
Sous-ensemble de véhicule automobile

(30) Priorität: 16.04.2002 DE 20206310 U
(43) Veröffentlichungstag der Anmeldung: 22.10.2003
(73) Patentinhaber: Takata-Petri AG, 63743 Aschaffenburg (DE)
(72) Erfinder: Weis, Peter, 63874 Dammbach (DE); Hasselbacher, Bernd, 63839 Kleinwallstadt (DE); Maierhofer, Gunter, 10249 Berlin (DE); Sauer, Frank, 63843 Niedernberg (DE); Pallincas, Gabor, 02900 Arad (RO)
(74) Vertreter: Baumgärtel, Gunnar

(56) Entgegenhaltungen:
- EP-A- 1 103 430
- EP-A- 1 167 132
- DE-U- 20 017 527
- US-A- 5 380 037
- US-B1- 6 196 573

## Beschreibung

Die Erfindung betrifft eine Kraftfahrzeugbaugruppe nach dem Oberbegriff des Anspruchs 1.

Eine derartige Kraftfahrzeugbaugruppe umfasst einen Lenkradkörper eines Kraftfahrzeuglenkrades, ein mittels einer Rastverbindung an dem Lenkradkörper befestigbares Airbagmodul sowie Rastmittel zur Befestigung des Airbagmodules am Lenkradkörper an mindestens zwei von einander beabstandeten Befestigungsstellen. Das Airbagmodul ist demnach am Lenkradkörper lokal an mehreren separaten Befestigungsstellen festgelegt.

Eine derartige Kraftfahrzeugbaugruppe ist beispielsweise aus der US-PS 5,775,725 bekannt. Ein Nachteil der bekannten Kraftfahrzeugbaugruppe besteht darin, dass zum Lösen der Rastverbindung zwischen Airbagmodul und Lenkradkörper die Rastverbindung an einer Mehrzahl Befestigungsstellen gelöst werden muss, was einen entsprechenden Aufwand erfordert. Auch die EP-A-1167132 beschreibt eine Kraftfahrzeugbaugruppe zum Anbringen eines Airbagmoduls an einem Lenkrad an mehreren Arretierstellen. Dabei ist das Airbagmodul vom Lenkradkörper abnehhmbar, indem an einer Arretierstelle ein Arretierdraht in einer vorbestimmten Richtung gedreht wird, wodurch der Eingriff zwischen Arretierbereichen des Arretierdrahtes und Hakenbereichen in Stiften gleichzeitig an allen (drei) Arretierstellen freigegeben wird. Sodann kann das Airbagmodul einfach vom Lenkrad abgenommen werden. D.h., beim Lösen der Rastverbindung einer Befestigungsstelle werden gleichzeitig auch die Rastverbindungen an den weiteren Befestigungsstellen gelöst.

Der Erfindung liegt das Problem zugrunde, eine Kraftfahrzeugbaugruppe der eingangs genannten Art zu schaffen, bei der die Rastverbindung zwischen Airbagmodul und Lenkradkörper in einfacher Weise aufgehoben werden kann.

Dieses Problem wird erfindungsgemäß durch die Schaffung einer Kraftfahrzeugbaugruppe mit den Merkmalen des Anspruchs 1 gelöst.

Danach sind die zur Befestigung des Airbagmoduls an dem Lenkradkörper vorgesehenen Rastmittel derart angeordnet und ausgebildet, dass nach dem Lösen der Rastmittel an einer Befestigungsstelle das Airbagmodul vom Lenkradkörper abnehmbar ist, ohne die Rastmittel an einer weiteren Befestigungsstelle separat zu betätigen. Vielmehr ist das Airbagmodul nach dem Lösen der Rastmittel an der einen Befestigungsstelle durch einfache Bewegung relativ zu dem Lenkradkörper, insbesondere durch Verschieben oder Schwenken, von dem Lenkradkörper abnehmbar.

Die erfindungsgemäße Lösung hat den Vorteil, dass zum Aufheben der Verbindung zwischen Airbagmodul und Lenkradkörper die zur Befestigung des Airbagmoduls am Lenkradkörper dienenden Rastmittel lediglich an einer einzigen Befestigungsstelle gelöst werden müssen, worauf hin die Verbindung durch einfaches Bewegen des Airbagmoduls aufgehoben werden kann.

Zum Lösen der Rastmittel an der einen Befestigungsstelle kann dort ein Betätigungselement, z.B. in Form eines Federelementes, vorgesehen sein, das vorzugsweise einen Bestandteil der Rastverbindung bildet. Hierzu stützt sich das Rastelement im verrasteten Zustand an dem Betätigungselement ab und ist durch Bewegung, insbesondere Verschieben oder Verschwenken, und ggf. Verformung des Betätigungselementes mit diesem außer Eingriff bringbar, wodurch die Rastverbindung an der einen Befestigungsstelle gelöst wird. Mit anderen Worten ausgedrückt, befindet sich die Rastverbindung an der einen Befestigungsstelle nur dann im eingerasteten Zustand, wenn sich das Rastelement an dem Betätigungselement abstützt. Durch Verschieben oder Verschwenken des Betätigungselements aus der Position heraus, in der es als Stütze für das Rastelement dienen kann, lässt sich somit die Rastverbindung an der besagten Befestigungsstelle in einfacher Weise lösen.

Gemäß der Erfindung ist das Betätigungselement nur mit einer Befestigungsstelle der Rastverbindung gekoppelt. Die weiteren Befestigungsstellen sind derart ausgestaltet, dass die Rastverbindung dort durch eine Relativbewegung des Airbagmoduls zu dem Lenkradkörper aufgehoben werden kann, nachdem die Rastverbindung an der einen Befestigungsstelle gelöst worden ist. Solange die Rastverbindung an der einen Befestigungsstelle noch nicht aufgehoben ist, verhindert diese die besagte Relativbewegung des Airbagmoduls, so dass dieses im verrasteten Zustand der Rastverbindung an der einen Befestigungsstelle nicht von dem Lenkradkörper abnehmbar ist. Um hierbei eine Funktion als Anschlag übernehmen zu können, stützt sich das Betätigungselement vorzugsweise an mindestens einer Anlagefläche des Lenkradkörpers ab. Den weiteren Befestigungsstellen können Öffnungen, z.B. in Form je eines Langloches, zugeordnet sein, die ein Abnehmen des Airbagmoduls vom Lenkradkörper durch eine Relativbewegung entlang einer bestimmten Richtung ermöglichen, wobei diese beispielsweise durch die Erstreckungsrichtung der Langlöcher vorgegeben sein kann.

Die Rastmittel können an den einzelnen Befestigungsstellen jeweils durch separate Rastelemente, insbesondere in Form von Rasthaken gebildet werden, die in jeweils eine zugeordnete Rastöffnung eingreifen.

Ferner können elastische Mittel vorgesehen sein, über die sich das Airbagmodul unter Vorspannung am Lenkradkörper abstützt. Diese elastischen Mittel können in einfacher Weise durch einzelne elastische Elemente an der jeweiligen Befestigungsstelle gebildet werden, wobei die elastischen Elemente vorzugsweise auf dem Rastelement an der jeweiligen Befestigungsstelle angeordnet sind. Hierzu kann es sich bei den elastischen Elementen jeweils um Schraubenfedern handeln, die über die Rastelemente geschoben sind.

Durch die elastischen Elemente können die Rastmittel, insbesondere in Form einzelner Rastelemente, in ihrer jeweiligen Rastposition verspannt werden, so dass ein Lösen der Rastverbindung nur durch eine Bewegung des Betätigungselementes senkrecht zur Richtung der Vorspannung durchführbar ist.

Weitere Merkmale und Vorteile der Erfindung werden bei der nachfolgenden Beschreibung von Ausführungsbeispielen anhand der Figuren deutlich werden.

Es zeigen:
- Fig. 1: eine perspektivische Darstellung einer Ausführungsform eines Lenkradkörpers mit einer daran befestigten Modulaufnahme für ein Airbagmodul;
- Fig. 2a und 2b: jeweils ein Detail aus Figur 1 an einer Befestigungsstelle zur Verrastung der Modulaufnahme am Lenkradkörper.

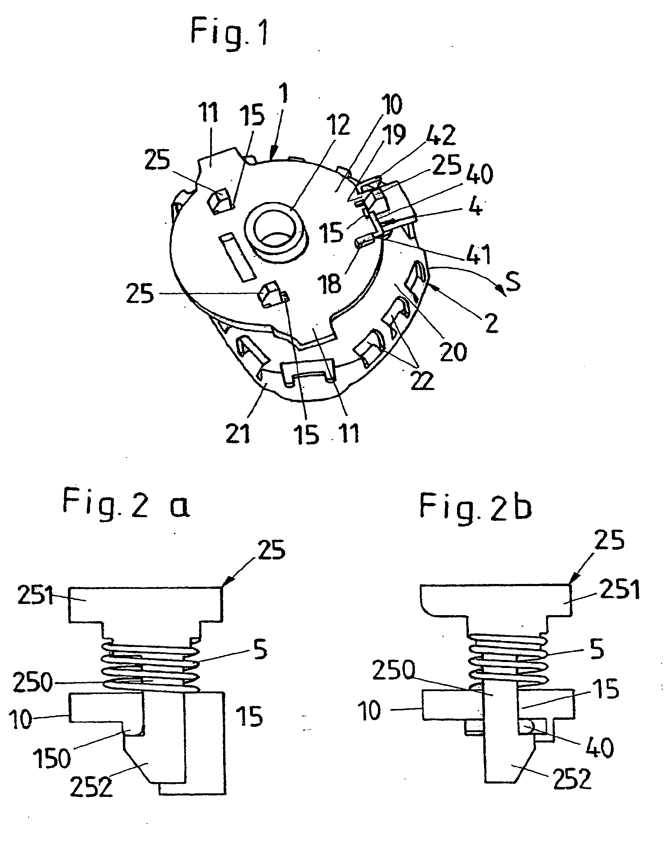

Vorab sei noch erwähnt, dass bei dem Ausführungsbeispiel gemäß Figur 1 von dem Grundkörper 20 der am Lenkradkörper 1 zu befestigenden Modulaufnahme 2 auch ein seitlich nach oben abstehender Rand 21 mit Rastöffnungen 22 zur Befestigung einer Modulabdeckung erkennbar ist.

"In den Figuren 1, 2a und 2b ist ein Lenkradkörper 1 mit einem flachen, kreisrunden Grundkörper 10, mit drei in der Ebene des Grundkörpers 10 hiervon abstehenden Aufnahmen 11 für Lenkradspeichen sowie einem senkrecht von dem Grundkörper 10 abstehenden Nabenteil 12 dargestellt, der in seinem Grundkörper 10 außerdem drei entlang des Umfangs des Grundkörpers von einander beabstandet angeordnete Befestigungsöffnungen 15 zur Befestigung eines Modulträgers 2 eines Airbagmoduls aufweist.

Der Modulträger 2 wird gebildet durch einen flach ausgebildeten Grundkörper 20, von dem senkrecht drei Rastelemente 25 in Form von Rasthaken abstehen, die in jeweils eine zugeordnete Befestigungsöffnung 15 des Lenkradkörpers 2 einführbar sind.

Gemäß Figur 1 ist im Bereich einer Befestigungsstelle 15, 25 ein Betätigungselement 4 angeordnet, wobei an dieser Befestigungsstelle 15, 25 gemäß Figur 2b der Befestigungskopf 252 des Rasthakens 25 sich an dem Grundkörper 40 des Betätigungselementes in Form eines Federelementes 4 abstützt.

Anhand Figur 2b ist ferner erkennbar, dass der Befestigungshaken 25 mit einem Schaft 250 die zugeordnete Rastöffnung 15 in dem Grundkörper 10 des Lenkradkörpers 1 umgreift und dass sich ein auf dem Schaft 250 angeordnetes elastisches Element 5 in Form einer Schraubenfeder einerseits an dem Grundkörper 10 des Lenkradkörpers 1 und andererseits an dem modulseitigen Ende 251 des Rasthakens 25 abstützt. Hierdurch ist die Modulaufnahme 2 elastisch an dem Lenkradkörper 1 gelagert. Gleichzeitig führt die Vorspannkraft der unter Vorspannung stehenden Schraubenfeder 5 (Druckfeder) dazu, dass der Rastkopf 252 des Rasthakens 25 unter Vorspannung gegen den Grundkörper 40 des Betätigungselementes 4 gedrückt wird, so dass die Rastverbindung gegen ein unbeabsichtigtes Lösen gesichert ist.

Aus Figur 1 geht hervor, dass das Betätigungselement 4 an seinem Grundkörper 40 zwei abgewinkelte Endabschnitte 41, 42 aufweist, von denen der eine sich an einem Anschlag 18 des Grundkörpers 10 des Lenkradkörpers 1 abstützt. Darüber hinaus ist ein weiterer, dem zweiten abgewinkelten Endabschnitt 42 benachbarter Abschnitt des Grundkörpers 40 des Federelementes 4 in einer am Lenkradkörper 1 angeformten Lasche 19 geführt. Das Federelement 4 stützt sich hierdurch derart am Grundkörper 10 des Lenkradköpers 1, insbesondere an dem hieran angeformten Anschlag 18 sowie der Lasche 19, ab, dass es eine Verschiebung des Rastelementes 25 in der Ebene des Grundkörpers 10 des Lenkradkörpers 1 verhindert.

Anhand Figur 2a ist erkennbar, dass sich an den beiden weiteren Befestigungsstellen 15, 25 die Rasthaken 25 mit ihren Rastköpfen 252 jeweils unmittelbar am Rand 150 der jeweils zugeordneten Befestigungsöffnung 15 abstützen.

Zum Lösen der in den Figuren 1, 2a und 2b dargestellten Rastverbindung wird zunächst das an der einen Befestigungsstelle 15, 25 vorgesehene Federelement 4 betätigt, wobei die Elastizität (Deformierbarkeit) des Federelementes 4 ausgenutzt wird, um es einerseits von dem Anschlag 18 an dem einen freien Ende 41 abzuheben und andererseits senkrecht zur Einführrichtung des Rasthakens 25 in die zugeordnete Befestigungsöffnung 15 so zu bewegen, dass der Rastkopf 252 des Rasthakens 25 außer Eingriff mit dem Grundkörper 40 des Federelementes 4 gerät. Hierdurch ist die Rastverbindung an der einen Befestigungsstelle 15, 25 gelöst. Gleichzeitig ist nun eine Verschiebung der Modulaufnahme 2 relativ zu dem Grundkörper 10 des Lenkradkörpers 1 in der Erstreckungsebene des Grundkörpers 10 möglich. Dadurch kann nun die Modulaufnahme 2 durch eine Schwenkbewegung S, die sich aus einer Verschiebebewegung in der Erstreckungsebene des Grundkörpers 10 des Lenkradkörpers 1 sowie einer Bewegung senkrecht hierzu zusammensetzt, von dem Lenkradkörper 1 abgenommen werden, wobei die Rasthaken 25 mit ihren Rastköpfen 252 durch die jeweils zugeordneten Befestigungsöffnungen 15 geführt werden. Die Befestigungsöffnungen 15 sind hierzu als Langlöcher mit einer hinreichend großen Ausdehnung (Länge) ausgebildet.

Im Ergebnis wird bei dem in den Figuren 1, 2a und 2b dargestellten Ausführungsbeispiel erreicht, dass bei einer Rastverbindung, bei der eine Modulaufnahme 2 an drei Befestigungsstellen 15, 25 mit einem Lenkradkörper 1 verbunden ist, durch Einwirkung auf ein Betätigungselement 4 in Form eines Federelementes an nur einer der Befestigungsstellen 15, 25 die Rastverbindung an allen drei Befestigungsstellen 15, 25 derart aufhebbar ist, dass die Modulaufnahme durch eine einfache Schwenkbewegung S vom Lenkradkörper 1 abgenommen werden kann.

## Patentansprüche

1. Kraftfahrzeugbaugruppe mit
- einem Lenkradkörper (1),
- einer am Lenkradkörper (1) mittels einer Rastverbindung befestigbaren Modulbaugruppe (2) eines Airbagmoduls und
- Rastmitteln (4, 5, 15, 25) zur Befestigung der Modulbaugruppe (2) am Lenkradkörper (1) an mindestens zwei voneinander beabstandeten Befestigungsstellen(15, 25),
**dadurch gekennzeichnet,**
**dass** die Rastmittel (4, 5, 15, 25) derart angeordnet und ausgebildet sind, dass durch Lösen eines Betätigungselementes (4) an einer Befestigungsstelle (15, 25) die Modulbaugruppe (2) vom Lenkradkörper (1) abnehmbar ist, ohne die Rastmittel (5, 15, 25) an einer weiteren Befestigungsstelle (15, 25) separat zu betätigen, wobei weitere Befestigungsstellen (15, 25) derart ausgebildet sind, dass die Rastverbindung dort durch eine Relativbewegung (S) der Modulbaugruppe (2) zu dem Lenkradkörper (1) aufgehoben werden kann, wenn die Rastverbindung an einer Befestigungsstelle (15, 25) gelöst worden ist.

2. Kraftfahrzeugbaugruppe nach Anspruch 1, **dadurch gekennzeichnet, dass** das Betätigungselement (4) durch ein Federelement gebildet wird.

3. Kraftfahrzeugbaugruppe nach Anspruch 1 und 2 , **dadurch gekennzeichnet, dass** das Betätigungselement (4) einen Bestandteil der Rastverbindung bildet.

4. Kraftfahrzeugbaugruppe nach Anspruch 3, **dadurch gekennzeichnet, dass** an der einen Befestigungsstelle (15, 25) ein Rastelement (25) der Rastmittel (4, 5, 15, 25) angeordnet ist, das sich im verrasteten Zustand an dem Betätigungselement (4) abstützt.

5. Kraftfahrzeugbaugruppe nach einem der Ansprüche 1 bis 4, **dadurch gekennzeichnet, dass** die Rastmittel (4, 5, 15, 25) an der einen Befestigungsstelle (15, 25) durch Bewegung, insbesondere durch Verschieben oder Verschwenken, und/oder durch Verformung des Betätigungselementes (4) lösbar sind.

6. Kraftfahrzeugbaugruppe nach Anspruch 5 , **dadurch gekennzeichnet, dass** durch Bewegung des Betätigungselementes (4) das Rastelement (25) außer Eingriff mit dem Betätigungselement (4) bringbar ist, wodurch die Rastverbindung an der einen Befestigungsstelle (15, 25) lösbar ist.

7. Kraftfahrzeugbaugruppe nach einem der vorhergehenden Ansprüche, **dadurch gekennzeichnet, dass** die Relativbewegung durch die eine Befestigungsstelle (15, 25) verhindert wird, solange die Rastverbindung dort nicht durch das Betätigungselement (4) gelöst ist.

8. Kraftfahrzeugbaugruppe nach Anspruch 7, **dadurch gekennzeichnet, dass** das Betätigungselement (4) als ein Anschlag wirkt, der die Relativbewegung verhindert.

9. Kraftfahrzeugbaugruppe nach Anspruch 8, **dadurch gekennzeichnet, dass** sich das Betätigungselement (4) an mindestens einer Stützfläche (18, 19) des Lenkradkörpers (1) abstützt.

10. Kraftfahrzeugbaugruppe nach einem der Ansprüche 7 bis 9, **dadurch gekennzeichnet, dass** den weiteren Betätigungsstellen (15, 25) Öffnungen (15), insbesondere in Form von Langlöchern, zugeordnet sind, die die Relativbewegung ermöglichen.

11. Kraftfahrzeugbaugruppe nach einem der vorhergehenden Ansprüche, **dadurch gekennzeichnet, dass** die Rastmittel (4, 5, 15, 25) an den Befestigungsstellen (15, 25) jeweils Rastelemente (25) aufweisen, die in eine zugeordnete Rastöffnung (15) eingreifen.

12. Kraftfahrzeugbaugruppe nach Anspruch 11, **dadurch gekennzeichnet, dass** die Rastelemente (25) als Rasthaken ausgebildet sind.

13. Kraftfahrzeugbaugruppe nach einem der vorhergehenden Ansprüche, **dadurch gekennzeichnet, dass** elastische Mittel (15) vorgesehen sind, über die sich die Modulbaugruppe (2) am Lenkradkörper (1) abstützt.

14. Kraftfahrzeugbaugruppe nach Anspruch 13, **dadurch gekennzeichnet, dass** die elastischen Mittel durch elastische Elemente (5) an den einzelnen Raststellen (15, 25) gebildet werden.

15. Kraftfahrzeugbaugruppe nach Anspruch 14, **dadurch gekennzeichnet, dass** die elastischen Elemente (5) auf Rastelementen (25) an den einzelnen Befestigungsstellen (15, 25) angeordnet sind.

16. Kraftfahrzeugbaugruppe nach einem der Ansprüche 13 bis 15, **dadurch gekennzeichnet, dass** die elastischen Elemente (5) jeweils durch eine Schraubenfeder gebildet werden.

17. Kraftfahrzeugbaugruppe nach einem der Ansprüche 13 bis 16, **dadurch gekennzeichnet, dass** die elastischen Mittel (5) einem Lösen der Rastverbindung zwischen Modulbaugruppe (2) und Lenkradkörper (1) entgegenwirken.

18. Kraftfahrzeugbaugruppe nach Anspruch 5 und 17, **dadurch gekennzeichnet, dass** die Bewegung (R) des Betätigungselementes (4) senkrecht zur Richtung der Vorspannung der Rastmittel (5) erfolgt.

## Claims

1. Motor vehicle subassembly having
- a steering wheel body (1),
- an airbag module subassembly (2) which can be fastened to the steering wheel body (1) by means of a latching connection, and
- latching means (4, 5, 15, 25) for fastening the module subassembly (2) to the steering wheel body (1) at at least two fastening points (15, 25), being spaced apart from each other,
**characterized in that**
the latching means (4, 5, 15, 25) are arranged and designed in such a manner that release of an actuating element at one fastening point (15, 25) enables the module subassembly (2) to be removed from the steering wheel body (1) without separately actuating the latching means (5, 15, 25) at a further fastening point (15, 25), wherein further fastening points (15, 25) are designed in such a manner that the latching connection may be lifted there by a movement (S) of the module subassembly (2) relative to the steering wheel body (1) if the latching connection at a fastening point (15, 25) has been released.

2. Motor vehicle subassembly according to claim 1, **characterized in that** the actuating element (4) is formed by a spring element.

3. Motor vehicle subassembly according to claim 1 and 2, **characterized in that** the actuating element (4) is part of the latching connection.

4. Motor vehicle subassembly according to claim 3, **characterized in that** a latching element (25) of the latching means (4, 5, 15, 25) is arranged at the one fastening point (15, 25) which latching element, in the latched state, is supported on the actuating element (4).

5. Motor vehicle subassembly according to one of claims 1 to 4, **characterized in that** the latching means (4, 5, 15, 25) at the one fastening point (15, 25) may be released by moving, in particular by displacing or pivoting and/or by deforming the actuating element (4).

6. Motor vehicle subassembly according to claim 5, **characterized in that** movement of the actuating element (4) enables the latching element (25) to be disengaged from the actuating element (4), as a result of which the latching connection at the one fastening point (15, 25) can be released.

7. Motor vehicle subassembly according to one of the preceding claims, **characterized in that** the relative movement is prevented by the one fastening point (15, 25) as long as the latching connection has not been released there by the actuating element (4).

8. Motor vehicle subassembly according to claim 7, **characterized in that** the actuating element (4) acts as a stop which prevents the relative movement.

9. Motor vehicle subassembly according to claim 8, **characterized in that** the actuating element (4) is supported on at least one supporting surface (18, 19) of the steering wheel body (1).

10. Motor vehicle subassembly according to one of claims 7 to 9, **characterized in that** openings (15) are assigned to the further fastening points (15, 25), in particular in the form of slots, which openings make the relative movement possible.

11. Motor vehicle subassembly according to one of the preceding claims, **characterized in that** at the fastening points (15, 25) the latching means (4, 5, 15, 25) in each case comprise latching elements (25) which engage in an assigned latching opening (15).

12. Motor vehicle subassembly according to claim 11, **characterized in that** the latching elements (25) are designed as latching hooks.

13. Motor vehicle subassembly according to one of the preceding claims, **characterized in that** elastic means (15) are provided via which the module subassembly (2) is supported on the steering wheel body (1).

14. Motor vehicle subassembly according to claim 13, **characterized in that** the elastic means are formed by elastic elements (5) at the individual latching points (15, 25).

15. Motor vehicle subassembly according to claim 14, **characterized in that** the elastic means (5) are arranged on latching elements (25) at the individual fastening points (15, 25).

16. Motor vehicle subassembly according to one of the claims 13 to 15, **characterized in that** the elastic elements (5) are in each case formed by a helical spring.

17. Motor vehicle subassembly according to one of claims 13 to 16, **characterized in that** the elastic means (5) counteract a release of the latching connection between the module subassembly (2) and steering wheel body (1).

18. Motor vehicle subassembly according to claims 5 and 17, **characterized in that** the movement (R) of the actuating element (4) takes place perpendicular with respect to the direction of the pretensioning of the latching means (5).

## Revendications

1. Groupe structurel pour véhicule automobile, comprenant
- un corps de volant de direction (1),
- un groupe structurel modulaire (2) d'un module d'airbag susceptible d'être fixé sur le corps de volant de direction (1) au moyen d'une jonction à enclenchement, et
- des moyens d'enclenchement (4, 5, 15, 25) pour la fixation du groupe structurel modulaire (2) sur le corps de volant de direction (1) à au moins deux emplacements de fixation (15, 25) espacés l'un de l'autre,
**caractérisé en ce que**
les moyens d'enclenchement (4, 5, 15, 25) sont agencés et réalisés de telle façon qu'en libérant un élément d'actionnement (4) à un emplacement de fixation (15, 25), le groupe structurel modulaire (2) peut être enlevé du corps de volant de direction (1) sans actionner séparément les moyens d'enclenchement (5, 15, 25) à un autre emplacement de fixation (15, 25), et d'autres emplacements de fixation (15, 25) sont réalisés de telle façon que la jonction à enclenchement peut y être défaite par un mouvement relatif (S) du groupe structurel modulaire (2) vers le corps de volant de direction (1) quand la jonction à enclenchement à un emplacement de fixation (15, 25) a été défaite.

2. Groupe structurel pour véhicule automobile selon la revendication 1, **caractérisé en ce que** l'élément d'actionnement (4) est formé par un élément à ressort.

3. Groupe structurel pour véhicule automobile selon la revendication 1 et 2, **caractérisé en ce que** l'élément d'actionnement (4) forme un élément constitutif de la jonction à enclenchement.

4. Groupe structurel pour véhicule automobile selon la revendication 3, **caractérisé en ce qu'**un élément d'enclenchement (25) des moyens à enclenchement (4, 5, 15, 25) est agencé à l'emplacement de fixation (15, 25), cet élément s'appuyant dans l'état enclenché sur l'élément d'actionnement (4).

5. Groupe structurel pour véhicule automobile selon l'une des revendications 1 à 4, **caractérisé en ce que** les moyens à enclenchement (4, 5, 15, 25) à l'emplacement de fixation (15, 25) peuvent être défaits par déplacement, en particulier par translation ou par pivotement et/ou par déformation de l'élément d'actionnement (4).

6. Groupe structurel pour véhicule automobile selon la revendication 5, **caractérisé en ce que** l'élément d'enclenchement (25) peut être amené hors de son engagement avec l'élément d'actionnement (4) par déplacement de l'élément d'actionnement (4), grâce à quoi la jonction à enclenchement à l'emplacement de fixation (15, 25) peut être défaite.

7. Groupe structurel pour véhicule automobile selon l'une des revendications précédentes, **caractérisé en ce que** le mouvement relatif est empêché par l'emplacement de fixation (15, 25) aussi longtemps que la jonction à enclenchement n'y est pas défaite par l'élément d'actionnement (4).

8. Groupe structurel pour véhicule automobile selon la revendication 7, **caractérisé en ce que** l'élément d'actionnement (4) agit à la manière d'une butée qui empêche le mouvement relatif.

9. Groupe structurel pour véhicule automobile selon la revendication 8, **caractérisé en ce que** l'élément d'actionnement (4) s'appuie sur au moins une surface de soutien (18, 19) du corps de volant de direction (1).

10. Groupe structurel pour véhicule automobile selon l'une des revendications 7 à 9, **caractérisé en ce que** des ouvertures (15), en particulier sous la forme de trous oblongs, sont associées aux autres emplacements de fixation (15, 25), lesquelles ouvertures permettent le mouvement relatif.

11. Groupe structurel pour véhicule automobile selon l'une des revendications précédentes, **caractérisé en ce que** les moyens à enclenchement (4, 5, 15, 25) aux emplacements de fixation (15, 25) comprennent respectivement des éléments d'enclenchement (25) qui s'engagent dans une ouverture d'enclenchement associée (15).

12. Groupe structurel pour véhicule automobile selon la revendication 11, **caractérisé en ce que** les éléments d'enclenchement (25) sont réalisés comme des crochets d'enclenchement.

13. Groupe structurel pour véhicule automobile selon l'une des revendications précédentes, **caractérisé en ce qu'**il est prévu des moyens élastiques (15) via lesquels le groupe structurel modulaire (2) s'appuie sur le corps de volant de direction (1).

14. Groupe structurel pour véhicule automobile selon la revendication 13, **caractérisé en ce que** les moyens élastiques sont formés par des éléments élastiques (5) aux emplacements d'enclenchement (15, 25) individuels.

15. Groupe structurel pour véhicule automobile selon la revendication 14, **caractérisé en ce que** les éléments élastiques (5) sont agencés sur des éléments d'enclenchement (25) aux emplacements de fixation individuels (15, 25).

16. Groupe structurel pour véhicule automobile selon l'une des revendications 13 à 15, **caractérisé en ce que** les éléments élastiques (5) sont formés chacun par un ressort hélicoïdal.

17. Groupe structurel pour véhicule automobile selon l'une des revendications 13 à 16, **caractérisé en ce que** les moyens élastiques (5) s'opposent à un détachement de la jonction à enclenchement entre le groupe structurel modulaire (2) et le corps de volant de direction (1).

18. Groupe structurel pour véhicule automobile selon la revendication 5 et 17, **caractérisé en ce que** le mouvement (R) de l'élément d'actionnement (4) a lieu perpendiculairement à la direction de précontrainte des moyens à enclenchement (5).
